(19) Europäisches Patentamt
European Patent Office
Office européen des brevets

(11) **EP 2 710 332 B1**

(12) **EUROPÄISCHE PATENTSCHRIFT**

(45) Veröffentlichungstag und Bekanntmachung des Hinweises auf die Patenterteilung:
**13.05.2015 Patentblatt 2015/20**

(21) Anmeldenummer: **12713929.3**

(22) Anmeldetag: **27.03.2012**

(51) Int Cl.:
**G01B 21/06** *(2006.01)* **G01B 21/32** *(2006.01)*
**B65G 43/02** *(2006.01)*

(86) Internationale Anmeldenummer:
**PCT/EP2012/055382**

(87) Internationale Veröffentlichungsnummer:
**WO 2012/156139 (22.11.2012 Gazette 2012/47)**

(54) **VORRICHTUNG UND VERFAHREN ZUR MESSUNG DER LÄNGUNG EINER KETTE, DIE ENDLOS IN DER VORRICHTUNG UMLÄUFT**

APPARATUS AND METHOD FOR MEASURING THE STRETCH OF A CHAIN WHICH CIRCULATES ENDLESSLY IN THE APPARATUS

DISPOSITIF ET PROCÉDÉ DE MESURE DE L'ALLONGEMENT D'UNE CHAÎNE TOURNANT EN CONTINU DANS LEDIT DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2011 DE 102011075994**

(43) Veröffentlichungstag der Anmeldung:
**26.03.2014 Patentblatt 2014/13**

(73) Patentinhaber: **Lindauer Dornier Gesellschaft mit beschränkter Haftung**
**88131 Lindau (DE)**

(72) Erfinder: **URBANZYK, Kai**
**88138 Weißensberg (DE)**

(56) Entgegenhaltungen:
**EP-A1- 1 464 919    GB-A- 2 406 844**
**JP-A- 59 078 007    US-A- 5 291 131**

EP 2 710 332 B1

## Beschreibung

Die vorliegende Erfindung betrifft eine Vorrichtung und ein Verfahren zur Messung der Längung einer Kette, die endlos in der Vorrichtung umläuft.

Derartige Vorrichtungen und Verfahren werden zum Beispiel in Anlagen zum Querrecken von Kunststofffolien - sogenannte Folienreckanlagen - verwendet.

Bei Folienreckanlagen ist im Stand der Technik bekannt, Kettenglieder die zu einer Kette miteinander verbunden sind, in der Folienreckanlage endlos umlaufbar anzuordnen. Üblich ist die Verwendung von zwei parallel laufenden Systemen von Ketten, die aus Kettengliedern bestehen, an denen Klemmen für den Folienrand, sogenannte Kluppen angeordnet sind. Mit Hilfe der Kluppen wird die Folie durch die Folienreckanlage transportiert. Die beiden Kettensysteme sind dabei so angeordnet, dass sich ihr Abstand quer zur Folientransportrichtung allmählich vergrößert.

Am Eingang und am Ausgang der Anlage sind Antriebs- und Umlenkeinrichtungen für jedes der beiden Kettensysteme vorgesehen. Nach Freigeben der Folie durch die Kluppen am Ausgang der Anlage kehren die Kettenglieder mit den Kluppen außerhalb der Folientransportbahn zum Eingang der Anlage zurück.

Die Kettenglieder laufen mit hoher Geschwindigkeit und unter erhöhter Temperatur. Daher unterliegen die Verbindungsgelenke zwischen den einzelnen Kettengliedern einem unerwünschten Verschleiß. Durch diesen Verschleiß wird der Abstand zwischen den Kettengliedern größer. Es entsteht eine Längung der jeweiligen Kette, die bei Überschreitung bestimmter Größenordnungen zu Laufstörungen und zu Fehlern im Folienreckprozess führt.

Um diese Störungen zu vermeiden, ist es erforderlich, rechtzeitig Wartungsmaßnahmen auszuführen. Um den Zeitpunkt für diese Wartungsmaßnahmen zu bestimmen, sind im Stand der Technik Meßsysteme bekannt, mit denen eine Längung der Kette im laufenden Betrieb der Kette ermittelt werden kann.

Eine derartige Messvorrichtung zeigt zum Beispiel die JP 2010 190578 A1.

Diese Messvorrichtung arbeitet mit zwei Sensoren, die Konturen der Kettenglieder bzw. der Kluppen abtasten. Aus einer Zeitdifferenz zwischen zwei Sensorsignalen und der aktuellen Kettengeschwindigkeit wird eine geometrische Länge für eine bestimmte Anzahl von Kettengliedern ermittelt.

Ähnlich arbeitet die Messvorrichtung gemäß GB 2 406 844 A und die Messvorrichtung gemäß US 5,291,131 A.

Auch die Vorrichtung zur Überwachung eines Fördergurtes gemäß DE 199 02 759 A1 arbeitet mit der Auswertung von Zeitdifferenzen zwischen Sensorsignalen.

In der JP 59 078007 A wird eine veränderte Zeitdifferenz zwischen zwei Sensorsignalen in Pulse umgesetzt, deren Anzahl optisch angezeigt wird.

Eine Vorrichtung zur Bestimmung einer Längung einer Kette offenbart auch die JP 07-268843 A. Darin wird jedoch anstelle eines Erfassungszeitunterschiedes zweier Sensoren ein Intensitätsunterschied von Signalen ausgewertet. Der Intensitätsunterschied ergibt sich aufgrund unterschiedlicher Lage der an der Kette angebrachten Elemente zur Signalerzeugung.

Die EP 1 873 088 A1 beschreibt eine Vorrichtung zur Ermittlung von Verschleiß bedingten Veränderungen an der Laufläche eines Riemens. Dabei werden von magnetischen Signalerzeugern, die in den Riemen eingebettet sind, bestimmte Magnetkraftverläufe erzeugt, die durch einen oder mehrere Sensoren erfasst und elektronisch ausgewertet werden.

Die EP 1 464 919 A1 offenbart ein Verfahren zur Überwachung einer Kette, bei dem ein Sensor bewegt werden muss, um eine Längung der Kette zu ermitteln. Aufgabe der vorliegenden Erfindung ist die Bereitstellung einer Vorrichtung und eines Verfahrens zur Längenmessung an einer Kette, die unabhängig von der Kettengeschwindigkeit arbeitet.

Diese Aufgabe wird mit einer Vorrichtung und einem Verfahren nach den unabhängigen Ansprüchen 1 und 7 gelöst.

Die Vorrichtung enthält eine Kette, die endlos in der Vorrichtung umlaufbar angeordnet ist. Zur Messung der Längung der Kette bzw. der Längendifferenz, die sich zwischen einem ersten und einem zweiten Betriebszustand einstellt, ist eine Messvorrichtung mit einem ersten Signalaufnehmer und mit einem zweiten Signalaufnehmer vorgesehen, die in einem Abstand zueinander angeordnet sind, der sich in Laufrichtung über mehrere Kettenglieder der Kette erstreckt.

An einem ersten Kettenglied ist ein erstes Element zur Signalerzeugung derartig angeordnet, dass bei umlaufender Kette beim Vorbeilaufen am ersten Signalaufnehmer ein Signal erzeugt wird.

Dieses Element zur Signalerzeugung kann zum Beispiel ein Element sein, mit dem optische Signale erzeugbar sind. Dazu genügt es, wenn Elemente am Kettenglied vorhanden sind, die beim Vorbeilaufen des Kettengliedes an einem optischen Signalaufnehmer, zum Beispiel einer Lichtschranke, einen Lichtstrahl unterbrechen oder reflektieren. Dazu können mechanische Konturen des Kettengliedes dienen oder mechanische Konturen der Elemente zum Erfassen und Klemmen einer Folie, den Kluppen, die an den Kettengliedern der Kluppenkette in einer Folienanlage angebracht sind.

Wenn der Signalaufnehmer eine Lichtschranke ist, wandelt er die aufgenommenen optischen Signale in elektrische Signale um, die anschließend an die Auswerteeinheit weiter geleitet werden. Denkbar ist jedoch auch, mit Hilfe von mechanischen Konturen des Kettengliedes oder der Kluppen beim Vorbeilaufen einen elektrischen Schalter, der als Signalaufnehmer dient, mechanisch zu betätigen. Dem Fachmann ist klar, dass auch andere Prinzipien zur Signalerzeugung und Signalaufnahme möglich sind, wie zum Beispiel ein metallisches Element zum berührungslosen Betätigen eines Magnet- oder Induktionsschalters oder piezoelektrische bzw. kapazitive Signalerzeugungs- und Signalaufnahmeprinzipien.

Die Messvorrichtung weist ein zweites Element zur Signalerzeugung auf, das an einem zweiten Kettenglied derartig angeordnet ist, dass bei umlaufender Kette beim Vorbeilaufen am zweiten Signalaufnehmer ein zweites Signal erzeugbar ist. Die möglichen Ausführungsformen von Elementen zur Signalerzeugung und zur Signalaufnahme entsprechen denen, die für das erste Kettenglied beschrieben wurden.

An dem zweiten Kettenglied sind erfindungsgemäß mehrere weitere Elemente zur Signalerzeugung derartig angeordnet, dass mit jedem dieser weiteren Elemente bei umlaufender Kette beim Vorbeilaufen am zweiten Signalaufnehmer ein weiteres Signal erzeugbar ist.

Bei der Ausführung des erfindungsgemäßen Verfahrens wird innerhalb eines Umlaufs der Kette die Anzahl von Signalen am zweiten Signalaufnehmer gezählt, die erzeugt werden, bevor ein erstes Signal am ersten Signalaufnehmer erzeugt wird. Bei einer Längung der Kette nimmt die Anzahl dieser Signale zu.

An der erfindungsgemäßen Messvorrichtung ist eine Auswerteinheit vorhanden, mit der diese Anzahl von Signalen am zweiten Signalaufnehmer zählbar ist.

Im Langsamlauf der Kette wäre aber auch ein Zählen der Anzahl von Signalen am zweiten Signalaufnehmer durch den Bediener denkbar.

Zur Ausführung des erfindungsgemäßen Verfahrens ist es vorteilhaft, wenn der Abstand der beiden Signalaufnehmer derartig bemessen ist, dass in einem ersten, ungelängten Betriebszustand der Kette innerhalb eines Umlaufs der Kette ein erstes Signal und ein zweites Signal erzeugt werden, bevor am zweiten Signalaufnehmer ein weiteres Signal erzeugt wird. Im Idealfall werden im ersten ungelängten Betriebszustand beide Signale gleichzeitig erzeugt. In diesem Fall ermittelt die Auswerteinheit innerhalb eines Umlaufs der Kette keine Signale am zweiten Signalaufnehmer, die erzeugt werden, bevor ein erstes Signal am ersten Signalaufnehmer erzeugt wird. Dies hängt von der Präzision der Position der Signalaufnehmer und von den Toleranzen der beteiligten Kettenglieder ab.

Daher ist es vorteilhaft, den Abstand der beiden Signalaufnehmer so einstellbar zu machen, dass er dem Abstand zwischen dem ersten und zweiten Element zur Signalerzeugung in einem ersten, ungelängten Betriebszustand der Kette entspricht. Durch das Längen der Kette vergrößert sich der Abstand zwischen dem ersten und dem zweiten Element zur Signalerzeugung. Das liegt daran, dass diese beiden Elemente an verschiedenen Kettengliedern angebracht sind und dass deren Abstand sich durch Verschleiß in den Gelenken oder Verbindungselementen zwischen den Kettengliedern vergrößert.

Das heißt, dass bei einem zweiten, gelängten Betriebszustand der Kette der Abstand zwischen dem ersten und zweiten Element zur Signalerzeugung größer ist als im ersten, ungelängten Betriebszustand.

Sobald durch den Verschleiß die Abstandsvergrößerung bzw. Verlängerung der Kette größer ist als der Abstand zwischen dem zweiten und den weiteren Elementen zur Signalerzeugung, die auf dem gleichen Kettenglied angeordnet sind, wird innerhalb eines Umlaufs der Kette durch eines dieser weiteren Elemente am zweiten Signalaufnehmer ein weiteres Signal erzeugt, bevor durch das erste Element zur Signalerzeugung ein Signal am ersten Signalaufnehmer erzeugt wird.

Wenn große Längendifferenzen der Kette zu erwarten sind, kann es vorteilhaft sein, weitere Elemente zur Signalerzeugung an weiteren Kettengliedern derartig anzuordnen, dass mit jedem dieser weiteren Elemente bei umlaufender Kette beim Vorbeilaufen am zweiten Signalaufnehmer ein weiteres Signal erzeugbar ist.

Die Präzision der Messung wird in diesem Fall zusätzlich vom aktuellen Abstand zwischen den mit Elementen zur Signalerzeugung ausgerüsteten einzelnen Kettengliedern beeinflusst. Der Kettengliedabstand dieser Messkettenglieder kann jedoch bei der Auswertung der Signale von vorne herein, zum Beispiel durch Eingabe in die Auswerteeinheit, berücksichtigt werden. Die Änderung dieses Kettengliedabstandes der Messkettenglieder durch Verschleiß im Betrieb der Kette ist dabei gegenüber der Gesamtlängung einer Kette mit mehreren 100 Kettengliedern zu vernachlässigen. Somit ist auch in diesem Fall das Ergebnis der Messung der Längung hinreichend genau.

Um dem Bediener die Information über den aktuellen Zustand der Kette zu geben, ist eine weitere Ausführungsform der Vorrichtung dadurch gekennzeichnet, dass mittels der Auswerteinheit aus den Signalen eine geometrische Länge berechenbar und dem Bediener anzeigbar ist. Eine Ausführungsform des erfindungsgemäßen Verfahrens sieht vor, dass diese Berechnung unter Verwendung der Anzahl derjenigen Signale am zweiten Signalaufnehmer erfolgt, die vor dem Signal am ersten Signalaufnehmer erzeugt werden.

Denkbar ist jedoch auch, dass lediglich die Anzahl von Signalen angezeigt wird, die innerhalb eines Umlaufs der Kette am zweiten Signalaufnehmer erzeugt werden, bevor ein erstes Signal am ersten Signalaufnehmer erzeugt wird. Je mehr Signale gezählt werden, desto größer ist die Längung der Kette und der Bediener kann bei Überschreitung einer vorgegebenen Anzahl von Signalen die Wartung der Kette durchführen.

Für die erwähnte Berechnung einer geometrischen Länge bzw. der Längung der Kette wird die Anordnung und Abmessung der Elemente zur Signalerzeugung verwendet.

Ein Berechnungsbeispiel soll dies verdeutlichen:

Angenommen es sind 10 Elemente zur Signalerzeugung in einem Abstand von A= 5 mm auf dem zweiten Kettenglied bzw. auf einer Kluppe angeordnet und diese Elemente sind B= 5 mm breit. Wenn nun die Auswerteinheit zum Beispiel feststellt, dass innerhalb eines Umlaufs der Kette am zweiten Signalaufnehmer NS2= 5 Signale erzeugt werden, bevor ein erstes Signal am ersten Signalaufnehmer erzeugt wird, so wird eine geometrische Länge nach der Gleichung

$$DL = (NS2-1) \times (A+B)$$

berechnet. Im vorliegenden Beispiel ergibt sich DL= 40 mm.

Das ist die Längung der Kette in dem Teilbereich, der sich in der aktuellen Laufrichtung in der Vorrichtung vom ersten Element zur Signalerzeugung zum zweiten Element zur Signalerzeugung an der Kette erstreckt. Bei dem im aktuellen Betriebszustand ermittelten Wert für diese Längung DL handelt es sich um die Längendifferenz im Teilebereich der Messstrecke gegenüber dem vorhergehenden Betriebszustand der Kette, in dem innerhalb eines Umlaufs der Kette beide Signale am ersten und zweiten Signalaufnehmer gleichzeitig erzeugt werden bzw. gegenüber dem Zustand, in dem das erste Signal am ersten Signalaufnehmer erzeugt wird, bevor mehr als ein Signal am zweiten Signalaufnehmer erzeugt wird. Die auf diese Weise ermittelte Längung DL der Kette in dem von der Messung erfassten Teilbereich kann bei Bedarf anschließend noch auf die gesamte Länge der Kette umgerecht werden. Dazu wird der Wert DL im Verhältnis zwischen der Anzahl der Kettenglieder, die im Teilbereich liegen und der gesamten Anzahl der Kettenglieder in eine Gesamtlängung umgerechnet.

Signale, die bei einem Umlauf der Kette am ersten Signalaufnehmer durch die Elemente zur Signalerzeugung des zweiten Kettenglieds erzeugt werden, werden von der Auswerteinheit ignoriert. Ebenso wird das Signal ignoriert, das bei einem Umlauf der Kette am zweiten Signalaufnehmer durch das Element zur Signalerzeugung des ersten Kettenglieds erzeugt wird.

Eine derartige Vorrichtung ist überall einsetzbar, wo die Längenänderung einer endlos umlaufenden Kette ohne Berücksichtigung der Kettengeschwindigkeit bestimmt werden soll. Besonders vorteilhaft ist die Anwendung in einer Folienreckanlage. Wenn auf Grund des Messergebnisses rechtzeitig eine Wartung oder ein Austausch der Kluppenkette erfolgt, werden Qualitätseinbußen oder Produktionsverluste vermieden. Denkbar ist der Einsatz dieser Messvorrichtung auch, um die Signale bezüglich der Längung von zwei parallel laufenden Kluppenketten den Antriebseinheiten für diese Kluppenketten in der Folienreckanlage zu zuleiten. Mit Hilfe dieser Signale kann somit beim Transport einer Folie der synchrone Lauf durch die beiden Ketten unterstützt werden.

**Figur 1** Schematische Darstellung einer Ausführungsform der erfindungsgemäßen Vorrichtung,

**Figur 2** vergrößerte Ansicht der Vorrichtung gemäß Figur 1 im Bereich des ersten Signalaufnehmers,

**Figur 3** vergrößerte Ansicht der Vorrichtung gemäß Figur 1 im Bereich des zweiten Signalaufnehmers bei ungelängter Kette,

**Figur 4** vergrößerte Ansicht der Vorrichtung gemäß Figur 3 im Bereich des zweiten Signalaufnehmers bei gelängter Kette.

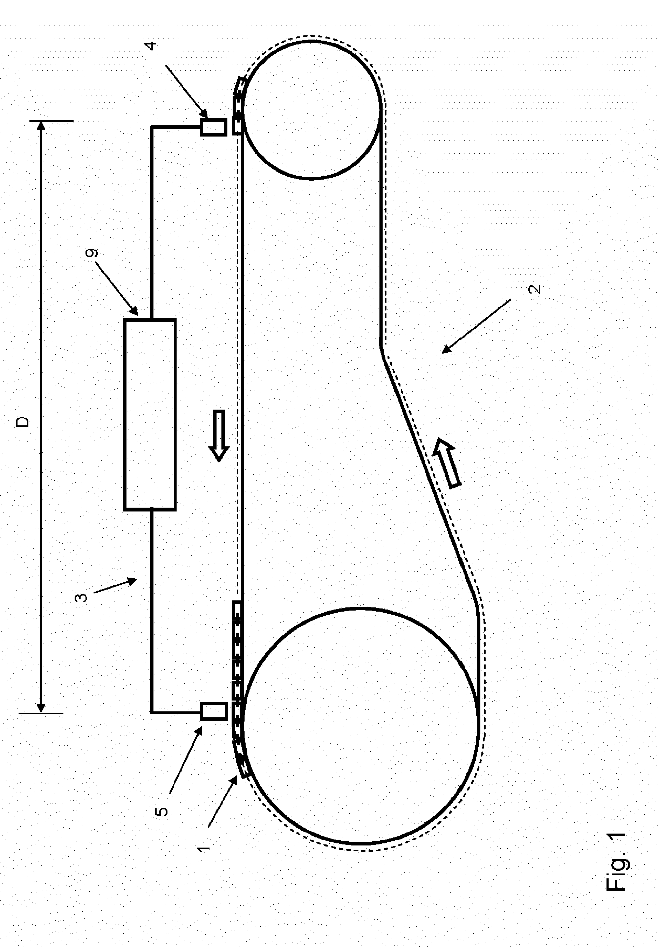

Figur 1 zeigt eine Vorrichtung 2, die Elemente zum Antreiben und Umlenken einer endlos in der Vorrichtung 2 umlaufenden Kette 1 aufweist. Die Kettenglieder sind in den Figuren schematisch nur in den hier interessierenden Teilbereichen der Kette dargestellt.

Die Vorrichtung 2 gemäß Figur 1 könnte zum Beispiel Bestandteil einer Folienreckanlage sein, in der dann allerdings zwei solcher Vorrichtungen 2 spiegelbildlich angeordnet werden müssen, sodass zwischen den beiden parallel laufenden Ketten 1 eine Folie transportiert werden kann.

Figur 1 zeigt die Messvorrichtung 3 mit den beiden Signalaufnehmer 4 und 5, die in einem großen Abstand D voneinander angeordnet sind. In einer Folienreckanlage erfolg diese Anordnung am besten in dem Bereich, in dem die Kluppenkette 1 außerhalb des Folienbereichs vom einen Ende zum anderen Ende der Anlage zurückläuft.

Die Signalaufnehmer 4, 5 sind mit einer zur Messvorrichtung 3 gehörenden Auswerteinheit 9 elektrisch verbunden. Bei den in der Messvorrichtung 3 der vorliegenden Ausführungsform verwendeten Signalaufnehmern 4, 5 handelt es sich um induktive Näherungssensoren, die ein elektrisches Signal abgeben, wenn ein metallischer Gegenstand daran in geringer Distanz vorbeigeführt wird. Die Befestigung der Sensoren erfolgt auf eine Art und Weise, die eine Einstellung des Abstandes D in Laufrichtung der Kette 1 ermöglicht.

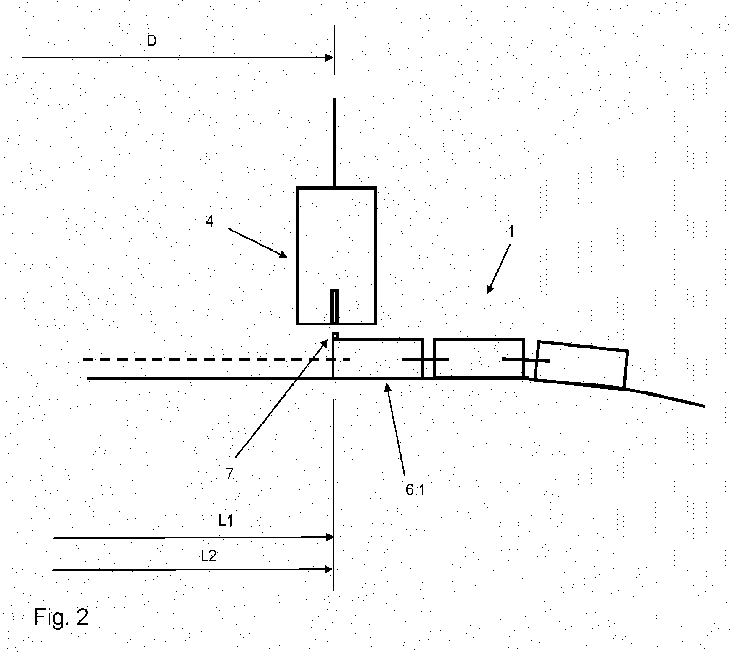

Figur 2 zeigt vergrößert den Bereich der Vorrichtung 2, in der der erste Signalaufnehmer 4, der induktive Sensor, in geringem Abstand zu den Kettengliedern 6 angeordnet ist. Das erste Kettenglied 6.1 ist mit einem ersten Element zur Signalerzeugung 7 ausgestattet. Im vorliegenden Ausführungsbeispiel der erfindungsgemäßen Vorrichtung 2 bestehen die an den Kettengliedern 6 angeordneten Elemente zur Signalerzeugung 7, 8 aus kleinen Metallklötzen, die an der den Signalaufnehmern 4, 5 zugewandten Seite der Kettenglieder 6 angebracht sind. In einer Folienreckanlage werden die klotzartige Signalerzeuger 7 an einer passenden Fläche der Kluppen, die Kettenglieder 6 bilden, angebracht.

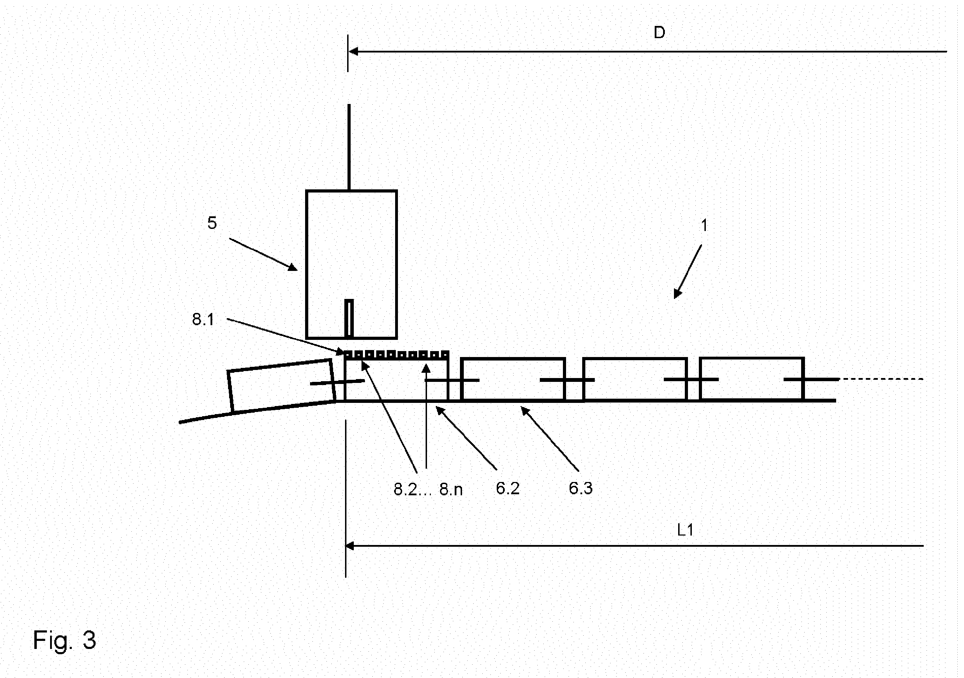

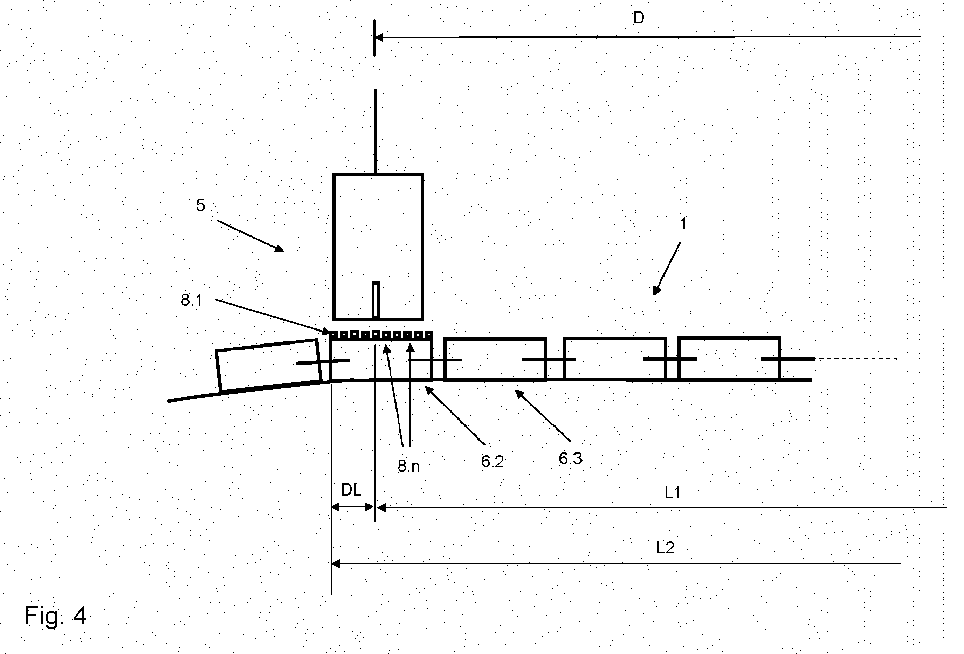

Die Bedeutung der Abstände L1 und L2 geht aus den Figuren 3 und 4 hervor.

Figur 3 zeigt die Vorrichtung 2 gemäß Figur 1 in einer vergrößerten Teilansicht in einem ersten Betriebszustand der Kette 1. Es ist ein zweiter Signalaufnehmer 5 vorhanden, der im Abstand D vom ersten Signalaufnehmer 4 in der Messvorrichtung 3 angeordnet ist.

Weiterhin ist ein zweites Element zur Signalerzeugung 8.1, ein klotzartiger Signalerzeuger, an einem zweiten Kettenglied 6.2 angebracht. Der Abstand D ist in diesem ersten Betriebszustand auf das gleiche Maß eingestellt wie der Abstand L1 zwischen dem ersten Element zur Signalerzeugung 7 und dem zweiten Element zur Signalerzeugung 8.1 am ersten bzw. zweiten Kettenglied 6.1 bzw. 6.2. Der erste Betriebszustand ist vorzugsweise der ungelängte Zustand der noch nicht verschlissenen Kette 1. Bei Bedarf kann der Bediener jedoch den Abstand D in jedem Betriebszustand der Kette 1 auf den aktuellen Abstand L1 neu einstellen. Erfindungsgemäß weist das zweite Kettenglied 6.2 mehrere weitere Elemente zur Signalerzeugung 8.2...8.n auf. Diese sind alle derartig angebracht, dass bei Vorbeilaufen am zweiten Signalaufnehmer 5 ein elektrisches Signal erzeugt wird, das an die Auswerteinheit 9 weiter geleitet wird.

Zur Ermittlung größerer Längungen ist die Anordnung zusätzlicher Elemente zur Signalerzeugung 8.m an einem weiteren Kettenglied 6.3 jederzeit möglich, jedoch in den Figuren nicht dargestellt. Denkbar ist auch der Austausch ganzer Kettenglieder 6 ohne Elemente zur Signalerzeugung 8 gegen solche Kettenglieder, die mehrere Elemente zur Signalerzeugung 8 aufweisen.

Figur 4 zeigt die Vorrichtung 2 gemäß Figur 3 in einem zweiten Betriebszustand der Kette 1. Dieser zweite Betriebszustand ist durch eine Längung der Kette 1 um den Betrag DL gegenüber dem ersten Betriebszustand gekennzeichnet.

Durch diese Längung vergrößert sich der Abstand zwischen dem ersten Element zur Signalerzeugung 7 am ersten Kettenglied 6.1 und dem zweiten Element zur Signalerzeugung 8.1 am zweiten Kettenglied 6.2; aus dem Maß L1 wird das Maß L2.

Bei einem Umlauf der Kette 1 in der Vorrichtung 2 in dem zweiten Betriebszustand laufen folgende Vorgänge ab:

- das zweite Element zur Signalerzeugung 8.1 am zweiten Kettenglied 6.2 erzeugt am zweiten Signalaufnehmer 5 ein Signal;
- weitere Elemente zur Signalerzeugung 8.2...8.n am zweiten Kettenglied 6.2 erzeugen am zweiten Signalaufnehmer 5 weitere Signale;
- das erste Element zur Signalerzeugung 7 am ersten Kettenglied 6.1 erzeugt am ersten Signalaufnehmer 4 ein Signal;
- die Auswerteinheit 9 zählt die Anzahl der Signale am zweiten Signalaufnehmer 5, die dort erzeugt werden, bevor das erste Signal am ersten Signalaufnehmer 4 erzeugt wird;
- aus der Anzahl der gezählten Signale und aus der geometrischen Anordnung der klotzartigen Elemente zur Signalerzeugung 8 am zweiten Kettenglied 6.2 wird die Längung DL im Teilbereich der Messstrecke berechnet;
- aus der Längung DL im Teilbereich und aus dem Verhältnis zwischen der Anzahl der Kettenglieder, die im Teilbereich liegen und der gesamten Anzahl der Kettenglieder wird eine Gesamtlängung der Kette berechnet;
- die Gesamtlängung wird numerisch an einer nicht dargestellten Anzeigeeinheit der Messvorrichtung 3 angezeigt;
- bei Überschreiten einer bestimmten Gesamtlängung im laufenden Betrieb der Vorrichtung 2 wird dem Bediener ein optisches Warnsignal gegeben.

Bezugszeichen

| 1 | Kette |
|---|---|
| 2 | Vorrichtung, in der die Kette umläuft |
| 3 | Messvorrichtung |
| 4 | erster Signalaufnehmer |
| 5 | zweiter Signalaufnehmer |
| 6.1, 6.2, 6.3 | Kettenglieder |

| 7 | erstes Element zur Signalerzeugung |
| 8.1 | zweites Element zur Signalerzeugung |
| 8.2, 8.3,...8.n, 8.m | weitere Elemente zur Signalerzeugung |
| 9 | Auswerteeinheit |

| D | Abstand zwischen Signalaufnehmern |
| L1 | Abstand zwischen dem ersten und dem zweiten Element zur Signalerzeugung im ersten Betriebszustand der Kette |
| L2 | Abstand zwischen dem ersten und dem zweiten Element zur Signalerzeugung im zweiten Betriebszustand der Kette |
| DL | Differenz zwischen L2 und L1 |
| NS2 | Anzahl Signale am Sensor 2 |

**Patentansprüche**

1. Vorrichtung (2) mit einer Kette (1), die endlos in der Vorrichtung (2) umlaufbar angeordnet ist und mit einer Messvorrichtung (3) zur Messung einer Längung (DL) der Kette mit einem ersten Signalaufnehmer (4) und mit einem zweiten Signalaufnehmer (5), die in einem Abstand (D) zueinander angeordnet sind, der sich in Laufrichtung über mehrere Kettenglieder (6) der Kette (1) erstreckt und mit einem ersten Element zur Signalerzeugung (7), das an einem ersten Kettenglied (6.1) derartig angeordnet ist, dass bei umlaufender Kette (1) beim Vorbeilaufen am ersten Signalaufnehmer (4) ein Signal erzeugbar ist und mit einem zweiten Element zur Signalerzeugung (8.1), das an einem zweiten Kettenglied (6.2) derartig angeordnet ist, dass bei umlaufender Kette (1) beim Vorbeilaufen am zweiten Signalaufnehmer (5) ein zweites Signal erzeugbar ist, **dadurch gekennzeichnet, dass** an dem zweiten Kettenglied (6.2) mehrere weitere Elemente zur Signalerzeugung (8.2...8.n) derartig angeordnet sind, dass mit jedem dieser weiteren Elemente (8.2...8.n) bei umlaufender Kette (1) beim Vorbeilaufen am zweiten Signalaufnehmer (5) ein weiteres Signal erzeugbar ist und dass eine Auswerteinheit (9) vorhanden ist, mit der innerhalb eines Umlaufs der Kette (1) die Anzahl (NS2) von Signalen am zweiten Signalaufnehmer (5) zahlbar ist, die erzeugt werden, bevor ein erstes Signal am ersten Signalaufnehmer (4) erzeugt wird und anhand dieser Anzahl (NS2) die Längung (DL) der Kette (1) in einem Teilbereich, welcher sich vom ersten Element zur Signalerzeugung (7) zum zweiten Element zur Signalerzeugung (8.1) an der Kette (1) erstreckt, ermittelbar ist.

2. Vorrichtung (2) nach Anspruch 1, **dadurch gekennzeichnet, dass** der Abstand (D) zwischen den beiden Signalaufnehmern (4, 5) derartig einstellbar ist, dass er dem Abstand (L1) zwischen dem ersten und zweiten Element zur Signalerzeugung (7, 8.1) in einem ersten, ungelangten Betriebszustand der Kette (1) entspricht.

3. Vorrichtung (2) nach Anspruch 2, **dadurch gekennzeichnet, dass** bei einem zweiten, gelängten Betriebszustand der Kette (1) der Abstand (L2) zwischen dem ersten und zweiten Element zur Signalerzeugung (7, 8.1) größer ist als der Abstand (L1) im ersten, ungelängten Betriebszustand.

4. Vorrichtung (2) nach einem der vorhergehenden Ansprüche **dadurch gekennzeichnet, dass** an mindestens einem weiteren Kettenglied (6.3) mehrere weitere Elemente zur Signalerzeugung (8.m) derartig angeordnet sind, dass mit jedem dieser weiteren Elemente bei umlaufender Kette (1) beim Vorbeilaufen am zweiten Signalaufnehmer (5) ein weiteres Signal erzeugbar ist.

5. Vorrichtung (2) nach einem der vorhergehenden Ansprüche **dadurch gekennzeichnet, dass** mittels der Auswerteinheit (9) aus der Anzahl der Signale (NS2) eine geometrische Lange (DL) berechenbar und dem Bediener anzeigbar ist.

6. Folienreckanlage mit einer Vorrichtung (2) nach einem der vorhergehenden Ansprüche, wobei die Kettenglieder (6) Elemente zum Erfassen und Klemmen einer Folie aufweisen.

7. Verfahren zur Messung einer Längung (DL) einer Kette (1), die endlos in einer Vorrichtung (2) umlauft mit einem ersten Signalaufnehmer (4) und einem zweiten Signalaufnehmer (5), die in einem Abstand zueinander angeordnet sind, der sich in Laufrichtung über mehrere Kettenglieder (6) der Kette (1) erstreckt, wobei von einem ersten Element zur Signalerzeugung (7), das an einem ersten Kettenglied (6.1) angeordnet ist, ein erstes Signal am ersten Signalaufnehmer (4) erzeugt wird und wobei von einem zweiten Element zur Signalerzeugung (8.1), das an einem zweiten Kettenglied (6.2) angeordnet ist, ein zweites Signal am zweiten Signalaufnehmer (5) erzeugt wird, **dadurch ge-**

**kennzeichnet, dass** innerhalb eines Umlaufs der Kette (1) durch mehrere Elemente zur Signalerzeugung (8.1, 8.2...8.n), die ebenfalls an dem zweiten Kettenglied (6.2) angeordnet sind, mehrere Signale am zweiten Signalaufnehmer (5) erzeugt werden, bevor ein erstes Signal am ersten Signalaufnehmer (4) erzeugt wird und dass innerhalb eines Umlaufs der Kette (1) die Anzahl (NS2) von Signalen am zweiten Signalaufnehmer (5) gezählt wird, die erzeugt werden, bevor ein erstes Signal am ersten Signalaufnehmer (4) erzeugt wird und dass die Längung (DL) der Kette (1) in einem Teilbereich, welcher sich vom ersten Element zur Signalerzeugung (7) zum zweiten Element zur Signalerzeugung (8.1) an der Kette (1) erstreckt, ermittelt wird.

8. Verfahren nach Anspruch 7 **dadurch gekennzeichnet, dass** der Abstand (D) zwischen den beiden Signalaufnehmern (4, 5) derartig eingestellt wird, dass er dem Abstand (L1) zwischen dem ersten und zweiten Element zur Signalerzeugung (7, 8.1) in einem ersten, ungelängten Betriebszustand der Kette (1) entspricht.

9. Verfahren nach einem der Ansprüche 7 oder 8 **dadurch gekennzeichnet, dass** aus der Anzahl (NS2) der Signale am zweiten Signalaufnehmer (5), die vor dem Signal am ersten Signalaufnehmer (4) erzeugt werden, mittels einer Auswerteeinheit (9) eine geometrische Lange (DL) berechnet und an weitere Elemente der Vorrichtung (2) weiter geleitet wird.

10. Verfahren nach einem der Ansprüche 7 bis 9 **dadurch gekennzeichnet, dass** die Vorrichtung (2) Bestandteil einer Folienreckanlage ist, wobei die Kettenglieder (6) Elemente zum Erfassen und Klemmen einer Folie aufweisen.

**Claims**

1. An apparatus (2) having a chain (1), which is arranged such that it can be circulated endlessly in the apparatus (2) and having a measurement apparatus (3) for measuring a stretch (DL) of the chain with a first signal pickup (4) and with a second signal pickup (5), which are arranged with a distance (D) between them, which extends in the running direction over a plurality of chain members (6) of the chain (1) and having a first element for signal generation (7), which is arranged on a first chain member (6.1) such that in the case of a circulating chain (1) a signal can be generated when the element passes the first signal pickup (4) and having a second element for signal generation (8.1), which is arranged on a second chain member (6.2) such that a second signal can be generated when the element passes the second signal pickup (5), **characterized in that** a plurality of further elements for signal generation (8.2 ... 8.n) are arranged on the second chain member (6.2) such that in the case of a circulating chain, a further signal can be generated with each of these further elements (8.2 ... 8.n) when they pass the second signal pickup (5) and that an evaluation unit (9) is available, with which within a circulation of the chain (1) the number (NS2) of signals at the second signal pickup (5) can be counted, which are generated before the first signal is generated at the first signal pickup (4) and by means of this number (NS2) the stretch (DL) of the chain (1) in a subsection, which extends from the first element for signal generation (7) to the second element for signal generation (8.1) on the chain (1), can be determined.

2. An apparatus (2) according to claim 1, **characterized in that** the distance (D) between the two signal pickups (4, 5) is adjustable such that it corresponds to the distance (L1) between the first and second element for signal generation (7, 8.1) in a first, unlengthened operating state of the chain (1).

3. An apparatus (2) according to claim 2, **characterized in that** in the case of a second, lengthened operating state of the chain (1) the distance (L2) between the first and second element for signal generation (7, 8.1) is greater than the distance (L1) in the first, unlengthened operating state.

4. An apparatus (2) according to one of the preceding claims **characterized in that** several further elements for signal generation (8.m) are arranged on at least one further chain member (6.3) such that with each of these further elements in the case of a circulating chain (1) a further signal can be generated when the element passes the second signal pickup (5).

5. An apparatus (2) according to one of the preceding claims **characterized in that** by means of the evaluation unit (9) a geometrical length (DL) can be calculated from the number of signals (NS2) and can be displayed to the operator.

6. A film stretching machine having an apparatus (2) according to one of the preceding claims, wherein the chain members (6) have elements for gripping and clamping a film.

7. A method for measuring a stretch (DL) of a chain (1), which circulates endlessly in an apparatus (2) having a first signal pickup (4) and a second signal pickup (5) which are arranged with a distance between them, which extends in the running direction over a plurality of chain members (6) of the chain (1), wherein from a first element for signal generation (7), which is arranged on a first chain member (6.1), a first signal is generated at the first signal pickup (4), and wherein from a second element for signal generation (8.1), which is arranged on a second chain member (6.2) a second signal is generated at the second signal pickup (5), **characterized in that** within a circulation of the chain (1) by several elements for signal generation (8.1, 8.2 ... 8.n), which are also arranged on the second chain member (6.2), several signals are generated at the second signal pickup (5), before a first signal is generated at the first signal pickup (4) and that within a circulation of the chain (1) the number (NS2) of signals at the second signal pickup (5) is counted, which are generated, before a first signal is generated at the first signal pickup (4) and that the stretch (DL) of the chain (1) in a subsection, which extends from the first element for signal generation (7) to the second element for signal generation (8.1) on the chain (1), can be determined.

8. A method according to claim 7 **characterized in that** the distance (D) between the two signal pickups (4, 5) is adjusted such that it corresponds to the distance (L1) between the first and the second element for signal generation (7, 8.1) in a first, unlengthened operating state of the chain (1).

9. A method according to one of claims 7 or 8 **characterized in that** from the number (NS2) of signals at the second signal pickup (5), which are generated before the signal at the first signal pickup (4), a geometrical length (DL) is calculated by means of an evaluation unit (9) and is transmitted to other elements of the apparatus (2).

10. A method according to one of claims 7 to 9 **characterized in that** the apparatus (2) is a component of a film stretching machine, wherein the chain members (6) have elements for gripping and clamping a film.

## Revendications

1. Dispositif (2) comprenant une chaîne (1) qui est agencée de façon à pouvoir tourner sans fin dans le dispositif (2) et comprenant un dispositif de mesure (3) destiné à mesurer un allongement (DL) de la chaîne avec un premier capteur de signaux (4) et avec un deuxième capteur de signaux (5), qui sont agencés à une distance (D) l'un par rapport à l'autre qui s'étend sur plusieurs maillons de chaîne (6) de la chaîne (1) dans le sens de rotation et comprenant un premier élément de production de signaux (7), qui est agencé au niveau d'un premier maillon de chaîne (6.1) de telle sorte que lorsque la chaîne (1) est en rotation et qu'elle passe devant le premier capteur de signaux (4), un signal peut être produit, et comprenant un deuxième élément de production de signaux (8.1), qui est agencé au niveau d'un deuxième maillon de chaîne (6.2) de telle sorte que lorsque la chaîne (1) est en rotation et qu'elle passe devant le deuxième capteur de signaux (5), un deuxième signal peut être produit, **caractérisé en ce que** plusieurs éléments supplémentaires de production de signaux (8.2 ... 8.n) sont agencés au niveau du deuxième maillon de chaîne (6.2) de telle sorte qu'avec chacun de ces éléments supplémentaires (8.2 ... 8.n), lorsque la chaîne (1) est en rotation et qu'elle passe devant le deuxième capteur de signaux (5), un signal supplémentaire peut être produit et **en ce qu'**il est prévu une unité d'analyse (9) qui permet de compter, au cours d'une rotation de la chaîne (1), le nombre (NS2) de signaux qui sont produits au niveau du deuxième capteur de signaux (5) avant qu'un premier signal soit produit au niveau du premier capteur de signaux (4) et de déterminer, sur la base de ce nombre (NS2), l'allongement (DL) de la chaîne (1) dans une zone partielle qui s'étend depuis le premier élément de production de signaux (7) jusqu'au deuxième élément de production de signaux (8.1) sur la chaîne (1).

2. Dispositif (2) selon la revendication 1, **caractérisé en ce que** la distance (D) entre les deux capteurs de signaux (4, 5) peut être réglée de telle sorte qu'elle correspond à la distance (L1) entre les premier et deuxième éléments de production de signaux (7, 8.1) dans un premier état de fonctionnement de la chaîne (1) dans lequel elle n'est pas allongée.

3. Dispositif (2) selon la revendication 2, **caractérisé en ce que** dans un deuxième état de fonctionnement de la chaîne (1) dans lequel elle est allongée, la distance (L2) entre les premier et deuxième éléments de production de signaux (7, 8.1) est plus grande que la distance (L1) dans le premier état de fonctionnement non allongé.

4. Dispositif (2) selon l'une des revendications précédentes, **caractérisé en ce que** plusieurs éléments supplémentaires de production de signaux (8.m) sont agencés au niveau d'au moins un autre maillon de chaîne (6.3) de telle sorte qu'avec chacun de ces éléments supplémentaires, lorsque la chaîne (1) est en rotation et qu'elle passe devant le deuxième capteur de signaux (5), un signal supplémentaire peut être produit.

**5.** Dispositif (2) selon l'une des revendications précédentes, **caractérisé en ce qu'**une longueur géométrique (DL) peut être calculée et indiquée à l'opérateur au moyen de l'unité d'analyse (9) à partir du nombre de signaux (NS2).

**6.** Installation d'étirage de film comprenant un dispositif (2) selon l'une des revendications précédentes, dans laquelle les maillons de chaîne (6) présentent des éléments destinés à la saisie et au pincement d'un film.

**7.** Procédé de mesure d'un allongement (DL) d'une chaîne (1) qui tourne sans fin dans un dispositif (2) comprenant un premier capteur de signaux (4) et un deuxième capteur de signaux (5), qui sont agencés à une distance l'un par rapport à l'autre qui s'étend sur plusieurs maillons de chaîne (6) de la chaîne (1) dans le sens de rotation, dans lequel un premier signal est produit au niveau du premier capteur de signaux (4) par un premier élément de production de signaux (7), qui est agencé au niveau d'un premier maillon de chaîne (6.1), et dans lequel un deuxième signal est produit au niveau du deuxième capteur de signaux (5) par un deuxième élément de production de signaux (8.1), qui est agencé au niveau d'un deuxième maillon de chaîne (6.2), **caractérisé en ce qu'**au cours d'une rotation de la chaîne (1), plusieurs signaux sont produits au niveau du deuxième capteur de signaux (5) par plusieurs éléments de production de signaux (8.1, 8.2 ... 8.n), qui sont également agencés au niveau du deuxième maillon de chaîne (6.2), avant qu'un premier signal soit produit au niveau du premier capteur de signaux (4), **en ce qu'**au cours d'une rotation de la chaîne (1), le nombre (NS2) de signaux qui sont produits au niveau du deuxième capteur de signaux (5) avant qu'un premier signal soit produit au niveau du premier capteur de signaux (4) est compté et **en ce que** l'allongement (DL) de la chaîne (1) dans une zone partielle qui s'étend depuis le premier élément de production de signaux (7) jusqu'au deuxième élément de production de signaux (8.1) sur la chaîne (1) est déterminé.

**8.** Procédé selon la revendication 7, **caractérisé en ce que** la distance (D) entre les deux capteurs de signaux (4, 5) est réglée de telle sorte qu'elle correspond à la distance (L1) entre les premier et deuxième éléments de production de signaux (7, 8.1) dans un premier état de fonctionnement de la chaîne (1) dans lequel elle n'est pas allongée.

**9.** Procédé selon l'une des revendications 7 ou 8, **caractérisé en ce qu'**une longueur géométrique (DL) est calculée et transmise à d'autres éléments du dispositif (2) au moyen d'une unité d'analyse (9) à partir du nombre (NS2) de signaux au niveau du deuxième capteur de signaux (5) qui sont produits avant le signal au niveau du premier capteur de signaux (4).

**10.** Procédé selon l'une des revendications 7 à 9, **caractérisé en ce que** le dispositif (2) fait partie intégrante d'une installation d'étirage de film, étant entendu que les maillons de chaîne (6) présentent des éléments destinés à la saisie et au pincement d'un film.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2010190578 A
- GB 2406844 A
- US 5291131 A
- DE 19902759 A1
- JP 59078007 A
- JP 7268843 A
- EP 1873088 A1
- EP 1464919 A1